# EUROPEAN PATENT APPLICATION

(11) **EP 4 571 654 A1**
(43) Date of publication of application: **18.06.2025**
(21) Application number: 24748242.5
(22) Date of filing: 16.07.2024
(51) Int. Cl.: G06T 13/80, G06F 3/0484, G06T 11/60, G06T 11/40, G06F 16/58, G06N 3/0475

(54) **ELECTRONIC DEVICE AND METHOD FOR GENERATING IMAGE WITH CHANGED TIMELINE, AND NON-TRANSITORY COMPUTER-READABLE RECORDING MEDIUM**

(30) Priority: 24.10.2023 KR 20230143387; 21.11.2023 KR 20230161985
(71) Applicant: Samsung Electronics Co., Ltd., Suwon-si, Gyeonggi-do 16677 (KR)
(72) Inventor: MUN, Jihun, Suwon-si, Gyeonggi-do 16677 (KR); KIM, Sungtae, Suwon-si, Gyeonggi-do 16677 (KR); PARK, Jiyoon, Suwon-si, Gyeonggi-do 16677 (KR); YOO, Nagyeom, Suwon-si, Gyeonggi-do 16677 (KR); HYUN, Daeyoung, Suwon-si, Gyeonggi-do 16677 (KR)
(74) Representative: Appleyard Lees IP LLP
(86) International application number: PCT/KR2024/010177
(87) International publication number: WO 2025/089547

(57) **Abstract**

The electronic device is disclosed. The electronic device selects an object of at least one object included in the input image. The electronic device identifies indication information regarding a state change of the selected object. The electronic device obtains a prompt related to the input image based on the indication information. The prompt includes at least one word for changing a state of the selected object included in the input image. The state is included in different states of the selected object. The electronic device generates at least one result image in which the state of the selected object is changed by inputting the input image and the prompt into a generative artificial intelligence model.

## Description

### [Technical Field]

The following description relates to an electronic device, a method, and a non-transitory computer readable storage medium for generating an image with a changed timeline.

### [Background Art]

Artificial intelligence, referred to herein as "AI", is a technology for simulating the neural activity of a person or another living thing, such as perception and/or inference. AI may be implemented in hardware, software, or a combination thereof designed to perform calculations that simulating neural activity.

### [Disclosure]

### [Technical Problem]

An electronic device is disclosed. The electronic device may include a processor. The electronic device may include memory storing instructions. The instructions, when executed by the processor, may cause the electronic device to select an object of at least one object included in an input image. The instructions, when executed by the processor, may cause the electronic device to identify indication information regarding a state change of the selected object. The instructions, when executed by the processor, may cause the electronic device to obtain a prompt related to the input image based on the indication information. The prompt may include at least one word for changing a state regarding the selected object included in the input image. The state may be included in different states of the selected object. The instructions, when executed by the processor, may cause the electronic device to generate at least one result image in which the state of the selected object is changed, by inputting the input image and the prompt into a generative AI, model.

A method is disclosed. The method may be performed by an electronic device. The method may include selecting an object of at least one object included in an input image. The method may include identifying indication information regarding a state change of the selected object. The method may include obtaining a prompt related to the input image based on the indication information. The prompt may include at least one word for changing a state regarding the selected object included in the input image. The state may be included in different states of the selected object. The method may include generating at least one result image in which the state of the selected object is changed, by inputting the input image and the prompt into a generative AI model.

A non-transitory computer readable storage medium is disclosed. The non-transitory computer readable storage medium may store a program including instructions. The instructions, when executed by a processor of the electronic device, may cause the electronic device to select an object of at least one object included in an input image. The instructions, when executed by the processor of the electronic device, may cause the electronic device to identify indication information regarding a state change of the selected object. The instructions, when executed by the processor of the electronic device, may cause the electronic device to obtain a prompt related to the input image based on the indication information. The prompt may include at least one word for changing a state for the selected object included in the input image may be included. The state may be included in different states of the selected object. The instructions, when executed by the processor, may cause the electronic device to generate at least one result image in which the state of the selected object is changed, by inputting the input image and the prompt into a generative AI model.

### [Description of the Drawings]

FIG. 1 is a block diagram of an electronic device in a network environment according to various embodiments.
FIG. 2 is a block diagram of an electronic device.
FIG. 3 illustrates an example of an operation in which an electronic device generates an image for providing an intermediate experience to a user.
FIG. 4 illustrates an example of an operation in which an electronic device generates an image for providing an intermediate experience to a user.
FIG. 5 illustrates an example of an operation in which an electronic device generates an image for providing an intermediate experience to a user.
FIG. 6A illustrates an example of an operation in which an electronic device generates an image for providing an intermediate experience to a user.
FIG. 6B illustrates an example of an operation in which an electronic device generates an image for providing an intermediate experience to a user.
FIG. 7 illustrates an example of an operation in which an electronic device generates an image for providing an intermediate experience to a user.
FIG. 8 is a flowchart illustrating an operation of an electronic device.
FIG. 9 is a flowchart illustrating an operation of an electronic device.
FIG. 10 is a flowchart illustrating an operation of an electronic device.
FIG. 11 is a flowchart illustrating an operation of an electronic device.
FIG. 12 is a flowchart illustrating an operation of an electronic device.

### [Mode for Invention]

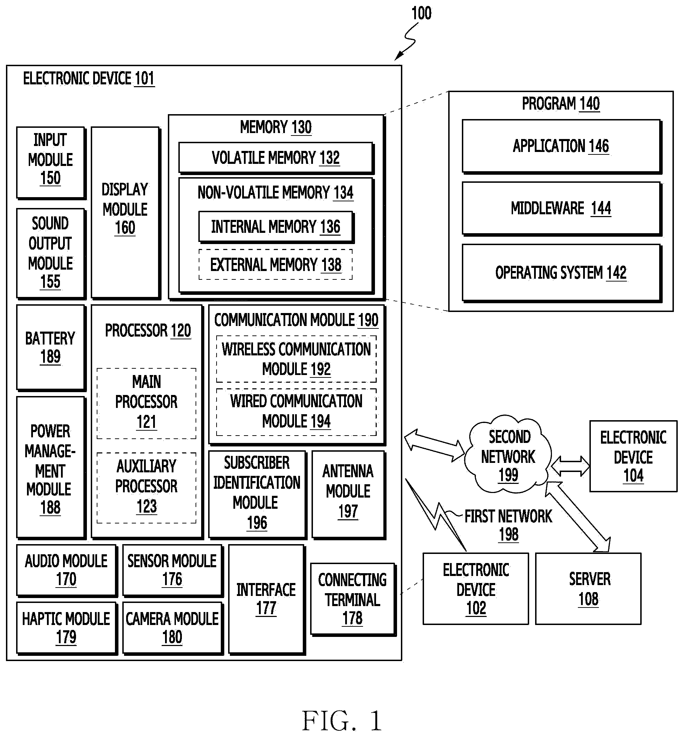

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

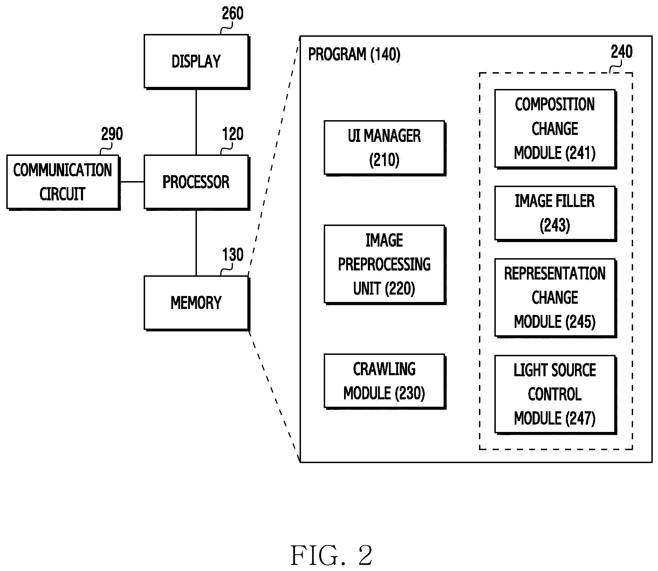

FIG. 2 is a block diagram of an electronic device 101.

Referring to FIG. 2, the electronic device 101 includes a processor 120, a memory 130, a display 260, and a communication circuit 290. The electronic device 101 may correspond to the electronic device 101 of FIG. 1. The processor 120 may correspond to the processor 120 of FIG. 1.

The memory 130 may correspond to the memory 130 of FIG. 1. The memory 130 may include a program 140. The program 140 may correspond to the program 140 of FIG. 1. The display 260 may correspond to the display module 160 of FIG. 1. The communication circuit 290 may correspond to the communication module 190 of FIG. 1.

The program 140 comprises a user interface "UI" manager 210, an image preprocessing unit 220, a crawling module 230, and an image processing unit 240. The UI manager 210, the image preprocessing unit 220, the crawling module 230, and the image processing unit 240 may be executed by the processor 120.

The UI manager 210 is configured to display selectable images through the display 260. In an example embodiment, the UI manager 210 comprises part of a gallery application. In an example embodiment, the UI manager 210 may be interconnected through an application programming interface "API" for providing a designated function to the gallery application. The API may be called in the gallery application to provide information regarding one or more images selected through the gallery application to the UI manager 210. The API may be called in the gallery application to display, through the UI manager 210, a screen including one or more selectable prompts related to one or more images selected through the gallery application.

The UI manager 210 is configured to identify an input image. The UI manager 210 may identify an input image of selectable images based on a user input. The UI manager 210 may identify an input image obtained through external electronic devices 102 and 103. The input image may include one single input image or more than one input images. At least a portion of objects in the one or more input images may be different. Meta information e.g., exchangeable image file format "EXIF" of the one or more input images may be at least partially different. Among the meta information regarding each of the one or more input images, at least one of location information e.g., latitude information and longitude information, camera setting information e.g., size, pixel, F number, color temperature, shutter speed, flash, international standard organization "ISO" sensitivity, magnification, field of view, composition or camera angle, photographing device, or photographing time may be different.

The UI manager 210 is configured to obtain a prompt. In an embodiment, the UI manager 210 may obtain a prompt related to an input image based on a user input. In an embodiment, the UI manager 210 may obtain indication information regarding a state change. In an embodiment, the UI manager 210 may obtain a prompt based on the indication information regarding an intended state change. In an embodiment, the UI manager 210 may obtain the prompt related to the input image, based on a user input to a screen displayed on the gallery application. Herein, the screen may include one or more selectable prompts related to one or more input images. In an embodiment, the UI manager 210 may obtain the prompt related to the input image through a prompt generator. In an embodiment, the prompt generator may be an AI model e.g., a stable diffusion model capable of changing the input image into text. In an embodiment, the indication information may be a generation guide of an image obtained based on the user input to the screen displayed on the gallery application. For example, the indication information may include information regarding a composition and/or a representation time point. The concept of representation time points is discussed in more detail below.

The prompt may include data for guiding the generation of an image based on the input image. The prompt may be instructions such a work guideline for a generative AI model included in the image processing unit 240. Such work guidelines include e.g., "Generate an intermediate experience image", "Generate an intermediate experience image with applied designated camera setup information and/or an image effect". The prompt may be a context input into the generative AI model e.g., information regarding an object included in the input image, information regarding an arrangement of the object, or information regarding a composition of the object. For example, the prompt may be data for setting a direction of description for one or more objects included in an output image generated based on the input image. The prompt may be data for setting camera setting information, a composition, and/or an image effect of the outputted image generated based on the input image. The prompt may be data including a set of words. For example, the words may describe an image to be generated and/or a state or a characteristic of at least one object included in the image.

The generative AI model may include a plurality of parameters related to a neural network having a structure based on an encoder and a decoder, such as a transformer. The generative AI model may include a bi-directional model e.g., bidirectional encoder representations from transformers "BERT", or an auto-encoding model e.g., diffusion model based on learning about the encoder. The generative AI model may include an auto-regressor model e.g., a generative pre-trained transformer GPT based on learning about the decoder. The generative AI model may include a sequence-to-sequence model e.g., stable diffusion, DALL-E2 based on learning about the encoder and the decoder. The generative AI model may include a large language model LLM for processing a natural language based on massive parameters. The generative AI model may include parameters for driving a neural network such as a convolutional neural network CNN, a recurrent neural network RNN, a feedforward neural network FNN and/or long short-term memory LSTM.

The image preprocessing unit 220 is configured to preprocess an input image.

The image preprocessing unit 220 may perform an image processing regarding the input image. For example, the image processing performed by the image preprocessing unit 220 may include a processing e.g., denoise, deblur, dehaze, white balance to improve the image quality of the input image. Since the image preprocessing unit 220 performs the processing to improve the image quality of the input image, the quality of the image generated by the image processing unit 240 may be improved.

The image preprocessing unit 220 may detect and classify one or more objects in the input image. For example, the image preprocessing unit 220 may detect an area of one or more objects in the input image. For example, the image preprocessing unit 220 may identify a type of the one or more objects detected in the input image, e.g., as food, a plate, a person, an animal, a plant, and/or as an object. For example, when a plate with food is included the input image, the image preprocessing unit 220 may identify the food and the plate.

The image preprocessing unit 220 may separate the one or more objects identified in the input image from the input image. The image preprocessing unit 220 may segment the one or more objects based on the boundary of each of the one or more objects identified in the input image. For example, when a plate with food is included the input image, the image preprocessing unit 220 may identify an area of the food and an area of the plate in the input image.

The image preprocessing unit 220 may estimate each area of the one or more objects that is deviated from the input image, based on each area of the one or more objects identified in the input image. An intact area of the object may include an area of the object identified in the input image and an area of the object that is deviated from the input image. For example, when the input image includes a plate including food, the image preprocessing unit 220 may estimate an area of food and an area of the plate that deviate from the input image.

The image preprocessing unit 220 may transmit data related to the one or more objects identified in the input image to the image processing unit 240. The data related to the one or more objects may include a type of the detected object, an area of the detected object, and/or an object image of the object segmented from the input image.

The crawling module 230 is configured to obtain data related to the input image. The crawling module 230 may crawl the data related to the input image on the Internet e.g., world wide web. The crawling module 230 may obtain the data related to the input image through crawling based on meta information e.g., EXIF included in the input image. For example, the crawling based on the meta information may include an operation for obtaining one or more data e.g., an image, a video, text from one or more web pages searched based on location information e.g., latitude information and longitude information included in the meta information. The crawling module 230 may obtain the data related to the input image obtained through crawling based on the one or more objects included in the input image. For example, the data related to the input image may be an image, a video, and/or text e.g., information on the object including the same object as the object included in the input image. For example, the data related to the input image may be an image and/or a video captured at a place where the input image was captured.

The crawling module 230 may input the data related to the input image as a prompt to the image processing unit 240. Hereinafter, data related to the input image obtained by the crawling module 230 may be referred to as crawled data.

The image processing unit 240 may generate a generated image based on a preprocessed input image. The image processing unit 240 may generate the generated image based on the preprocessed input image and crawled data. The image processing unit 240 may generate an image in which at least one of an area, a composition, a representation time point, or a light source of the one or more objects included in the input image is changed. The area of the object being changed may mean that the area of the object included in the generated image is changed to further include a newly drawn area from the area of the object included in the input image. For example, the newly drawn area may correspond to an area of the object that deviates from the input image. The composition of the object being changed may mean that an angle, or gaze of a camera, of the generated image has been changed from an angle of the camera of the input image. The composition of the object being changed may mean that an angle, or gaze of the camera, of the camera of an image, which is generated while a position of the object is fixed, has been changed from the angle of the camera of the input image. The composition of the object being changed may mean that a position of the object in the generated image has been changed from a position of the object in the input image. The composition of the object being changed may mean that an arrangement of the objects in the generated image has been changed from an arrangement of the objects in the input image. The composition of the object being changed may mean that the magnification, or size, of the object in the generated image has been changed from the magnification, or size, of the object in the input image. The representation time point of the object being changed may mean that a representation time point within a life cycle, or timeline, of the object included in the generated image is different from a representation time point in a life cycle of the object included in the input image. For example, the life cycle or timeline may include a time interval from a start time point to an end time point of the object. For example, the life cycle may include a time interval from a start time point to an end time point of a specific action, or state change, of the object. For example, when the object is food, the object may have a representation time point before eating the food at the start time point of the life cycle. For example, when the object is the food, the object may have a representation time point after eating the food at the end time point of the life cycle. For example, when the object is the food, at an intermediate time point of the life cycle, the object may have a representation time point between the representation time point before eating the food and the representation time point after eating the food. For example, when the object is the sun, the object may have a representation time point related to sunrise at the start time point of the life cycle. For example, when the object is the sun, the object may have a representation time point related to sunset at the end time point of the life cycle. For example, when the object is the sun, the object may have a representation time point between sunrise and sunset at the intermediated time point of the life cycle. The light source of the object being changed may mean that a position of a light source irradiating light to the object included in the generated image has been changed from a position of a light source irradiating light to the object included in the input image. The light source of the object being changed may mean that a color temperature of a light source irradiating light to the object included in the generated image has been changed from a color temperature of a light source irradiating light to the object included in the input image.

The image processing unit 240 may generate an image in which a background of one or more objects included in the input image is changed. The background of the object being changed may mean that an area outside the area of the object included in the generated image may be newly drawn. The image processing unit 240 may generate a generated image having the same background as the background of the one or more objects included in the input image. The background of the generated image is the same as the background of the one or more objects included in the input image, which may mean that the textures, colors, and/or shapes of the backgrounds are the same. For example, when the background of the one or more objects included in the input image is a wooden table, the background of the generated image may be a wooden table. The image processing unit 240 may generate a generated image having a background similar to the background of the one or more objects included in the input image. The background of the generated image is similar to the background of the one or more objects included in the input image, which may mean that the textures, colors, and/or shapes of the backgrounds are similar to each other. The background of the generated image is similar to the background of the one or more objects included in the input image may mean that a background characteristic of the generated image is similar to a background characteristic of the input image. The background characteristic may mean a texture, a color, and/or a shape of backgrounds.

The image processing unit 240 may include a composition change module 241, an image filler 243, a representation change module 245, and a light source control module 247.

Hereinafter, an operation in which the image processing unit 240 generates a generated image for an input image through the composition change module 241, the image filler 243, the representation change module 245, and the light source control module 247 will be described.

The composition change module 241 is configured to generate one or more first intermediate step images in which a composition of one or more objects included in an input image is changed. The composition change module 241 may generate the one or more first intermediate step images in which the composition of the one or more objects included in an input image is changed, by inputting the input image, or a preprocessed input image, into a generative AI model for changing the composition. The composition change module 241 may generate the one or more first intermediate step images in which the composition of the one or more objects included in the input image is changed, by inputting the input image and a prompt into the generative AI model. The composition change module 241 may generate the one or more first intermediate step images in which the composition of the one or more objects included in the input image is changed, by inputting a prompt related to the composition of the one or more objects into the generative AI model. The composition change module 241 may generate the one or more first intermediate step images in which an angle or gaze of the camera,, position or photographing position of the camera, arrangement, and/or magnification with respect to the one or more objects included in the input image are changed, by inputting the prompt related to the composition of the one or more objects into the generative AI model. The prompt related to the composition may be words representing the angle or the gaze of the camera, the position of the object or the photographing position of the camera, the arrangement of the object, and/or the magnification of the image. An example of the prompt related to the composition of the object may include "Change to a first state in which the food is photographed from above", "Change to a state in which the food is photographed from the front", "Change to a state lit by the sun", "Change to an arrangement of plates to a designated arrangement", "Change the size of a plate," or "Change the size of an image". A prompt inputted into a generative AI model of the composition change module 241 may include a prompt obtained through the UI manager 210 and/or crawling data obtained through the crawling module. The prompt related to the composition may include a word indicating a composition selected from among one or more compositions proposed to a user. The UI manager 210 may identify at least one composition, based on an input to an UI including examples of one or more selectable compositions. The composition change module 241 may generate one or more first intermediate step images in which an angle or gaze of the camera, position or position of the camera, arrangement, and/or magnification with respect to the one or more objects included in the input image are changed, by inputting a prompt including a word indicating the identified at least one composition into the generative AI model. The UI manager 210 may select one or more selectable compositions, based on the number of input images, the number of objects included in the input image, and/or a characteristic of the object. The prompt related to the composition may include a word indicating at least one composition selected based on the number of input images, the number of objects included in the input image, and/or the characteristic of the object.

The image filler 243 is configured to generate an image on which an image filling process e.g., in-painting or out-painting, has been performed, based on an area of one or more objects included in the input image. The image filler 243 may generate one or more second intermediate step images, by inputting one or more first intermediate step images into a generative AI model for an image filling process. The image filler 243 may generate one or more second intermediate step images by inputting one or more first intermediate step images and a prompt into the generative AI model. Herein, the image filling process may be a process in which an area other than the area of one or more objects newly draws. The prompt for the image filling process may be words representing a texture of an area to be filled. An example of the prompt for the image filling process may be "food plates on a table", "a flower bed", or "a street covered in fallen leaves". The prompt inputted into the generative AI model of the image filler 243 may include a prompt obtained through the UI manager 210 and/or crawling data obtained through the crawling module.

The image filler 243 may newly draw an area other than the area of the one or more objects of each of the one or more first intermediate step images, by inputting a prompt for guiding the image filling process into the generative AI model for the image filling process. A newly drawn portion in each of the one or more first intermediate step images may include an area of an object that is deviated from the input image. The newly drawn portion in each of the one or more first intermediate step images may include a background area deviated from the area of the object.

The representation change module 245 is configured to generate one or more third intermediate step images in which a representation time point of the one or more objects included in the input image is changed.

The representation change module 245 may generate the one or more third intermediate step images in which the representation time point of the one or more objects included in the input image is changed, by inputting the one or more second intermediate step images into the generative AI model for changing the representation time point. The representation change module 245 may generate the one or more third intermediate step images, by inputting the one or more second intermediate step images and the prompt into the generative AI model. The representation change module 245 may generate the one or more third intermediate step images in which the representation time point of the one or more objects included in the input image is changed by inputting the prompt related to the representation time point of the one or more objects into the generative AI model. The representation change module 245 may generate the one or more third intermediate step images in which a time point according to a life cycle of the one or more objects included in the input image is changed, by inputting the prompt related to the representation time point of the one or more objects into the generative AI model. A prompt related to the representation time point may be words related to the time point. An example of a prompt related to a time point of an object may include "Change to a state before eating food", "Change to a state after eating food", "Change to a state just before the sun rises", "Change to another season", "Change to another time zone", "Change to a state after raining", or "Change to a state wet in the rain". The prompt inputted into the generative AI model of the representation change module 245 may include the prompt obtained through the UI manager 210 and/or crawling data obtained through the crawling module.

A light source adjustment module 247 is configured to generate an image in which a light source with respect to the one or more objects included in the input image is changed. The light source adjustment module 247 may generate one or more fourth intermediate step images in which the light source with respect to the one or more objects is changed, by inputting the one or more third intermediate step images into a relight model. The relight model may be based on the AI model.

The UI manager 210 may display at least a portion of images finally generated by the image processing unit 240 through the display 260. For example, the UI manager 210 may sequentially display at least a portion of the generated images through the display 260. For example, the UI manager 210 may reproduce an animation in which at least a portion of the generated images are arranged, through the display 260. For example, the UI manager 210 may reproduce a generated image having a composition and a representation time point selected by a user input, among at least a portion of the generated images, through the display 260. The finally generated images may be referred to as an intermediate experience image. The intermediate experience image may be an image having a composition and/or a representation time point different from that of the input image. When a word related to the composition is included in the prompt, the intermediate experience image may have a composition different from that of the input image.

The UI manager 210 may feedback a prompt based on a user input for a generated image being displayed to the image processing unit 240. The prompt fed back to the image processing unit 240 may be a work guideline for the AI model of the image processing unit 240. For example, the user input may include an input for selecting a specific object among at least one object included in a generated image being displayed. For example, the user input may include an input for adjusting a position of a specific object included in the generated image being displayed. For example, the user input may include an input for adjusting a size of a specific object included in the generated image being displayed. For example, the user input may include an input for deleting a specific object included in the generated image being displayed. The user input may include a touch input for an object through the display 260. The user input may include an input for at least one control elements, e.g., executable objects, displayed through the display 260. Each of the at least one control elements, e.g., executable objects, may be related to a designated function. For example, each of the at least one control elements, e.g., executable objects, may include a function for selecting a specific object, a function for adjusting a location of the specific object, and/or a function for adjusting a size of the specific object. Each of the at least one control elements, e.g., executable objects, may be UIs overlapped on the generated image being displayed. Each of the at least one control elements, e.g., executable objects may be UIs disposed around the generated image being displayed.

The image processing unit 240 may change the finally generated images based on a prompt fed back. The image processing unit 240 may generate an image in which at least one of an area, a composition, a representation time point, or a light source of the one or more objects included in the finally generated images is changed, based on the prompt fed back. For example, the composition change module 241 may generate one or more first intermediate step images, which have been updated, by inputting the prompt fed back into the generative AI model for changing the composition. For example, the image filler 243 may generate one or more second intermediate step images, which have been updated, by inputting the prompt fed back into the generative AI model for the image filling process. For example, the representation change module 245 may generate one or more third intermediate step images, which have been updated, by inputting the prompt fed back into the generative AI model for changing the representation time point.

FIG. 2 illustrates that the composition change module 241, the image filler 243, the representation change module 245, and the light source control module 247 operate sequentially, but this is only an example. The operation order of the composition change module 241, the image filler 243, the representation change module 245, and the light source control module 247 may be changed. In order to generate a result image, only at least a portion of the composition change module 241, the image filler 243, the representation change module 245, or the light source control module 247 may operate.

As described above, the electronic device 101 may provide an experience that enables a user to view an image of an un-photographed composition and/or representation time point, by generating an image in which at least one of the area, the composition, the representation time point, or the light source of the input image is changed.

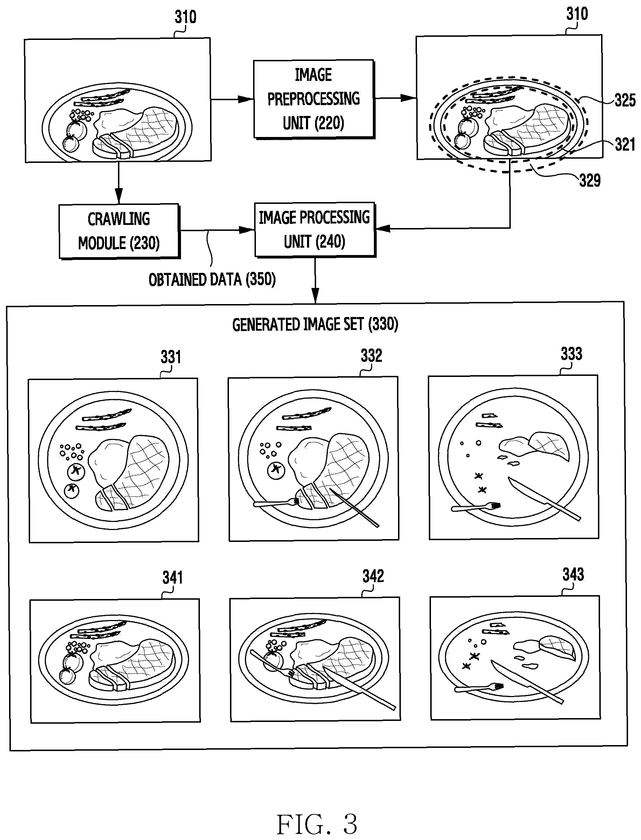

FIG. 3 illustrates an example of an operation in which an electronic device generates an image for providing an intermediate experience to a user.

FIG. 3 is described with reference to the content of FIGS. 1 and 2.

Referring to FIG. 3, an input image 310 may be selected. The input image 310 may be selected from among selectable images being displayed through a gallery application.

A UI manager 210 may identify the selected input image 310. The UI manager 210 may obtain a prompt related to the selected input image 310. The prompt related to the input image 310 may be a prompt selected from among one or more prompts selectable from a screen displayed on the gallery application. The prompt related to the input image 310 may be a prompt generated through a prompt generator. The prompt may include data for guiding a generation of an image based on the input image. The prompt may be a work guideline for a generative AI model included in an image processing unit 240.

The UI manager 210 may transmit the selected input image 310 to an image preprocessing unit 220. The UI manager 210 may transmit the selected input image 310 to a crawling module 230. The UI manager 210 may transmit the prompt related to the selected input image 310 to the image processing unit 240.

The image preprocessing unit 220 may detect and classify one or more objects 321 and 325 in the input image 310. For example, the image preprocessing unit 220 may detect the object 321 of the input image 310 and classify the detected object 321 as food. For example, the image preprocessing unit 220 may detect the object 325 of the input image 310 and classify the detected object 325 as a plate.

The image preprocessing unit 220 may separate the one or more objects 321 and 325 identified in the input image 310 from the input image 310. The image preprocessing unit 220 may segment the one or more objects 321 and 325, based on a boundary of each of the one or more objects 321 and 325 identified in the input image 310.

The image preprocessing unit 220 may estimate an area 329 of each of the one or more objects 321 and 325 that deviates from the input image 310, based on an area of each of the one or more objects 321 and 325 identified in the input image 310.

The image preprocessing unit 220 may transmit data related to the one or more objects 321 and 325 identified in the input image 310 to the image processing unit 240. The data related to the one or more objects 321 and 325 may include a type of a detected object, an area of the detected object, and/or an object image for an object segmented from the input image 310.

The crawling module 230 may obtain data 350 related to the input image 310. The crawling module 230 may crawl the data 350 related to the input image 310 on the Internet. The crawling module 230 may obtain the data 350 related to the input image 310 through crawling based on meta information, e.g., EXIF, included in the input image 310. For example, the crawling based on the meta information may include an operation for obtaining one or more data, e.g., image, image, text, from one or more web pages searched based on location information, e.g., latitude information and longitude information, included in the meta information. The crawling module 230 may obtain the data 350 related to the input image 310 through the crawling based on the one or more objects 321 and 325 included in the input image 310.

The crawling module 230 may input the data related to the input image to the image processing unit 240 as a prompt.

The image processing unit 240 is configured to generate a generated image set 330, based on the preprocessed input image 320. The image processing unit 240 may generate an image set 330 in which at least one of areas, compositions, representation time points, or light sources of the one or more objects 321 and 325 included in the preprocessed input image 320 is changed. For example, referring to FIG. 3, the input image 310 may be an image in which a food being eaten is photographed in a high view. Generated images 331, 332, and 333 included in the image set 330 may be images in which a food is photographed in a bird's eye view. The generated images 341, 342, and 343 included in the image set 330 may be images in which a food is photographed in a high view. The generated images 331 and 341 included in the image set 330 may be images obtained by photographing food before eating. The generated images 332 and 342 included in the image set 330 may be images obtained by photographing food while eating. The generated images 333 and 343 included in the image set 330 may be images obtained by photographing food after eating. For example, the generated images included in the image set 330 may include images photographed with various camera angles, e.g., a neutral view, a low view, and a worm's eye view. For example, the generated images included in the image set 330 may include images having various representation time points according to a life cycle.

The image processing unit 240 may generate one or more first intermediate step images in which a composition of one or more objects 321 and 325 included in the input image 310 is changed. The image processing unit 240 may generate the one or more first intermediate step images in which the composition of the one or more objects 321 and 325 included in the input image 310 is changed, by inputting a prompt related to the composition of the one or more objects 321 and 325 into the generative AI model. The prompt related to the composition may be words indicating an angle or gaze of the camera, a position, an arrangement, and/or a magnification of the camera. An example of the prompt related to the composition of the object may include "Change to a state in which the food is photographed from above", "Change to a state in which the food is photographed from the front", "Change to a state in which the food is located at the center of an image", "Change the arrangement of plates to a designated arrangement", or "Change the size of the plate".

The image processing unit 240 may generate one or more second intermediate step images on which an image filling process, e.g., in-painting or out-painting, has been performed, based on areas of the one or more objects 321 and 325 included in the input image 310. The image processing unit 240 may perform an image filling process for the one or more first intermediate step images, by inputting a prompt into the generative AI model. Herein, the image filling process may be a process of newly drawing an area other than the area of the one or more objects 321 and 325. The prompts for the image filling process may be words representing a texture of an area to be filled. An example of a prompt for an image filling process may be a "a table on which food plates are placed". A portion to be newly drawn in each of the one or more first intermediate step images may include an area 329 of the object that deviates from the input image 310. The portion to be newly drawn in each of the one or more first intermediate step images may include a background area that deviates from an area of the object.

The image processing unit 240 may generate one or more third intermediate step images in which the representation time point of one or more objects 321 and 325 included in the input image 310 is changed. The image processing unit 240 may generate the one or more third intermediate step images in which the representation time point of the one or more objects 321 and 325 included in the input image 310 is changed, by inputting a prompt related to the representation time point of the one or more objects 321 and 325 into the generative AI model. The prompt related to the representation time point may be words related to a time point. An example of a prompt related to a time point of an object may include "Change to a state before eating food", "Change to a state after eating food", or "Change to a state holding a dish to eat food".

A light source control module 247 may generate one or more fourth intermediate step images in which a light source with respect to the one or more objects 321 and 325 included in the input image 310 is changed. The light source control module 247 may generate the one or more fourth intermediate step images in which the light source with respect to the one or more objects 321 and 325 included in the input image 310 is changed. The one or more fourth intermediate step images may be finally generated images 331, 332, 333, 341,342 and 343.

The UI manager 210 may display, through a display 260, at least a portion of the images 331, 332, 333, 341, 342 and 343 finally generated at the image processing unit 240. For example, the UI manager 210 may sequentially display at least a portion of the generated images through the display 260. For example, the UI manager 210 may reproduce an animation in which at least a portion of the generated images are arranged, through the display 260. For example, the UI manager 210 may reproduce a generated image having a composition and a representation time point selected by a user input, among at least a portion of the generated images, through the display 260.

The UI manager 210 may provide a UI for selecting an image to be displayed through the display 260. For example, the UI manager 210 may select an image to be displayed from among the images 331, 332, 333, 341, 342 and 343 finally generated at the image processing unit 240, based on an input with respect to a UI, e.g., slider, for changing an image to be displayed. For example, as the UI, e.g., slider, for changing the image to be displayed moves in a first direction, the representation time point of the image to be displayed may approach a start time point. For example, as the UI, e.g., slider, for changing the image to be displayed moves in a second direction opposite to the first direction, the representation time point of the image to be displayed may approach an end time point. For example, as the UI, e.g., slider, for changing the image to be displayed moves in a first direction, a composition of the image to be displayed may be changed to the first direction. For example, as the UI, e.g., slider, for changing the image to be displayed moves in a second direction opposite to the first direction, the composition of the image to be displayed may be changed to the second direction.

For example, the UI manager 210 may sequentially display images according to a life cycle, in order to provide a time-lapse experience. For example, the UI manager 210 may sequentially display the finally generated images 331, 332, and 333. For example, the UI manager 210 may sequentially display the finally generated images 341, 342, and 343.

For example, the UI manager 210 may sequentially display images arranged in order in which a camera angle and/or a camera position is moved, in order to provide a user with an experience of recognizing a three dimensional "3D" space based on two dimensional "2D" images. For example, the UI manager 210 may sequentially display the finally generated images 331 and 341. For example, the UI manager 210 may sequentially display the finally generated images 332 and 342. For example, the UI manager 210 may sequentially display the finally generated images 333 and 343.

The UI manager 210 may feedback a prompt based on a user input for a generated image being displayed to the image processing unit 240. The prompt fed back to the image processing unit 240 may be a work guideline for the AI model of the image processing unit 240.

The image processing unit 240 may change the finally generated images, based on the prompt fed back. The image processing unit 240 may generate an image in which at least one of an area, a composition, a representation time point, or a light source of the one or more objects 321 and 325 included in the finally generated images is changed, based on the prompt fed back.

As described above, an electronic device 101 may provide an experience that enables a user to view an image of an un-photographed composition and/or representation time point, by generating an image in which at least one of an area, a composition, a representation time point, and a light source of the input image is changed. For example, the electronic device 101 may enable a user to appreciate a picture of the time point before or after photographing a picture of food, by generating the image in which at least one of the area, the composition, the representation time point, or the light source of the input image is changed.

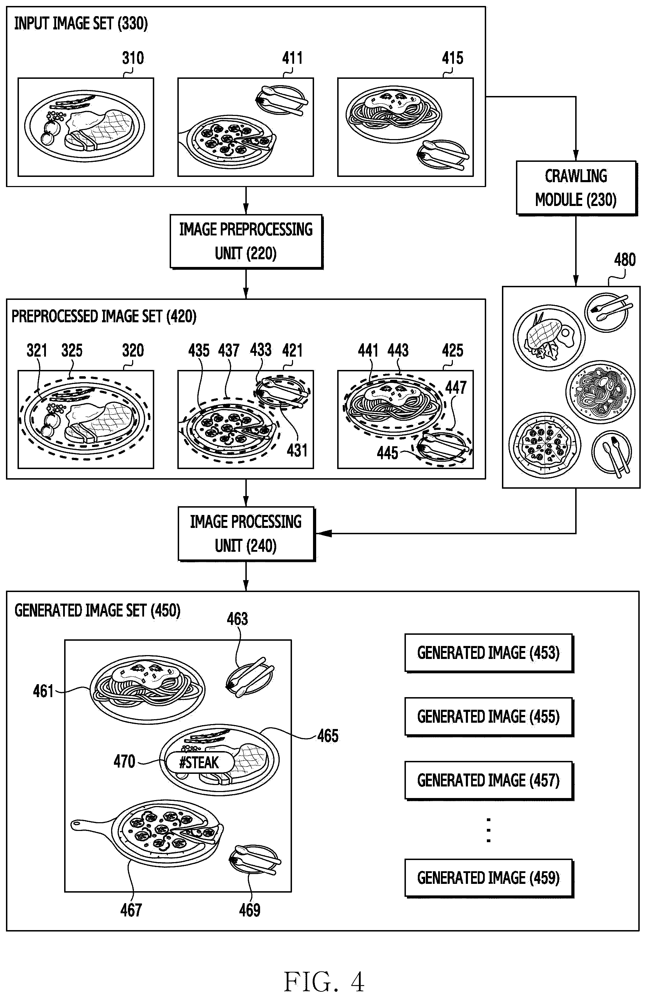

FIG. 4 illustrates an example of an operation in which an electronic device 101 generates an image for providing an intermediate experience to a user.

FIG. 4 is described with reference to the content of FIGS. 1 and 2.

Referring to FIG. 4, an input image set 410 may be selected. A plurality of input images 310, 411, and 415 may be selected from among selectable images being displayed through a gallery application. A portion of the plurality of the input images 310, 411, and 415 included in the input image set 410 may be selected through external electronic devices 102 and 103 rather than the electronic device 101.

AUI manager 210 may identify a selected input image set 410. The UI manager 210 may obtain a prompt related to the plurality of selected input images 310, 411, and 415. The prompt related to the input images 310, 411, and 415 may be a prompt selected from one or more prompts selectable from a screen displayed on the gallery application. The prompt related to the input images 310, 411, and 415 may be a prompt generated through a prompt generator. The prompt may include data for guiding a generation of an image based on the input image. The prompt may be a work guideline for a generative AI model included in an image processing unit 240.

The UI manager 210 may transmit the selected input image set 410 to an image preprocessing unit 220. The UI manager 210 may transmit the selected input image set 410 to a crawling module 230. The UI manager 210 may transmit a prompt related to the selected input image set 410 to the image processing unit 240.

The image preprocessing unit 220 may detect and classify one or more objects 321, 325, 431, 433, 435, 437, 441, 443, 445, and 447 from the input images 310, 411, and 415. For example, the image preprocessing unit 220 may detect objects 321, 431, and 441 from the input images 310, 411, and 415, and classify the detected objects 321, 431, and 441 as food. For example, the image preprocessing unit 220 may detect objects 435 and 445 from the input images 310, 411, and 415, and classify the detected objects 435 and 445 as a tableware. For example, the image preprocessing unit 220 may detect objects 325, 433, 437, 443, and 447 from the input images 310, 411, and 415, and classify the detected objects 325, 433, 437, 443, and 447 as a plate.

The image preprocessing unit 220 may separate the one or more objects 321, 325, 431, 433, 435, 437, 441, 443, 445, and 447 identified in the input images 310, 411, and 415 from the input images 310, 411, and 415. The image preprocessing unit 220 may segment the one or more objects 321, 325, 431, 433, 435, 437, 441, 443, 445, and 447, based on a boundary of each of the one or more objects 321, 325, 431, 433, 435, 437, 441, 443, 445, and 447.

The image preprocessing unit 220 may estimate an area 329 of each of the one or more objects 321, 325, 431, 433, 435, 437, 441, 443, 445, and 447 that deviates from the input images 310, 411, and 415, based on the area of each of the one or more objects 321, 325, 431, 433, 435, 437, 441, 443, 445, and 447 identified in the input images 310, 411, and 415.

The image preprocessing unit 220 may transmit data related to the one or more objects 321, 325, 431, 433, 435, 437, 441, 443, 445, and 447 identified in the input images 310, 411, and 415 to the image processing unit 240. The data related to the one or more objects 321, 325, 431, 433, 435, 437, 441, 443, 445, and 447 may include a type of a detected object, an area of the detected object, and/or an object image for an object segmented from the input images 310, 411, and 415.

The crawling module 230 is configured to obtain data 480 related to the input images 310, 411, and 415. The crawling module 230 may crawl the data 480 related to the input images 310, 411, and 415 on the Internet. The crawling module 230 may obtain the data 480 related to the input images 310, 411, and 415 through crawling based on meta information, e.g., EXIF, included in the input images 310, 411, and 415. Referring to FIG. 4, the data 480 may include objects, e.g., food, a piece of tableware, a plate, related to objects 321, 325, 431, 433, 435, 437, 441, 443, 445, and 447 included in the input images 310, 411, and 415.

The crawling module 230 may input the data 480 related to the input images 310, 411, and 415 to the image processing unit 240, as a prompt.

The image processing unit 240 is configured to generate a generated image set 450, based on the preprocessed image set 420. The image processing unit 240 may generate the generated image set 450 in which at least one of an area, a composition, a representation time point, or a light source of the objects 321, 325, 431, 433, 435, 437, 441, 443, 445, and 447 included in the preprocessed input images 310, 411, and 415 is changed. For example, referring to FIG. 4, the input images 310, 411, and 415 may be different images. The one or more generated images 451, 453, 455, 457, and 459 included in the generated image set 450 may include the objects 321, 325, 431, 433, 435, 437, 441, 443, 445, and 447 included in the input images 310, 411 and 415 in one image. The objects 321, 325, 431, 433, 435, 437, 441, 443, 445, and 447 included in the input images 310, 411, and 415 may be arranged in each of the one or more generated images 451, 453, 455, 457, and 459 included in the generated image set 450. Referring to FIG. 4, the objects 461, 463, 465, 467, and 469 may be arranged in the generated image 451. For example, the object 461 may correspond to the objects 321 and 325. For example, the object 463 may correspond to the objects 431 and 433. For example, the object 465 may correspond to the objects 435 and 437. For example, the object 467 may correspond to the objects 441 and 443. For example, the object 469 may correspond to the objects 445 and 447. Each of the one or more generated images 451, 453, 455, 457, and 459 may have a newly drawn area other than an area of each of the objects 461, 463, 465, 467, and 469.

The UI manager 210 may display at least a portion of the generated images 451, 453, 455, 457, and 459 finally generated in the image processing unit 240 though the display 260. For example, the UI manager 210 may sequentially display at least a portion of the generated images through the display 260. For example, the UI manager 210 may reproduce an animation in which at least a portion of the generated images are arranged, through the display 260. For example, the UI manager 210 may reproduce a generated image having a composition and a representation time point selected by a user input among at least a portion of the generated images through the display 260.

For example, the UI manager 210 may sequentially display images according to a life cycle to provide a time-lapse experience. For example, the UI manager 210 may sequentially display images arranged in order in which a camera angle and/or a camera position is moved, in order to provide a user with an experience of recognizing a 3D space based on 2D images.

The UI manager 210 may generate tag information regarding the objects 321, 325, 431, 433, 435, 437, 441, 443, 445, and 447 of the generated images 451, 453, 455, 457, and 459 included in the generated image set 450, based on information, e.g., a type, a place to sell, a place to buy, a location, and uniform resource locator "URL", regarding at least one object included in the data 480. The UI manager 210 may provide a search result of the tag information in response to an input for selecting the tag information, while the generated images 451, 453, 455, 457, and 459 are displayed through the display 260. For example, the UI manager 210 may provide a result of recommending a nearby restaurant that sells a steak corresponding to the object 465. For example, the UI manager 210 may provide the result of recommending one or more restaurants selling a steak corresponding to the object 465 in order of distance. For example, the UI manager 210 may display a page, according to the URL where a steak corresponding to the object 465 may be purchased.

The UI manager 210 may feedback a prompt based on a user input for a generated image being displayed to the image processing unit 240. The prompt fed back to the image processing unit 240 may be a work guideline for the AI model of the image processing unit 240.

The image processing unit 240 may change the finally generated images, based on a prompt fed back. The image processing unit 240 may generate an image in which at least one of an area, a composition, a representation time point, or a light source of the one or more objects 461, 463, 465, 467, and 469 included in the finally generated images is changed, based on the prompt fed back.

As described above, an electronic device 101 may provide an experience that enables a user to view an image of an un-photographed composition and/or representation time point, by generating an image in which at least one of an area, a composition, a representation time point, or a light source of the input image is changed. For example, the electronic device 101 may enable a user to appreciate a picture regarding a whole food by photographs in which a plurality of foods is photographed respectively by the user, by representing objects included in a plurality of fragmented images in one image.

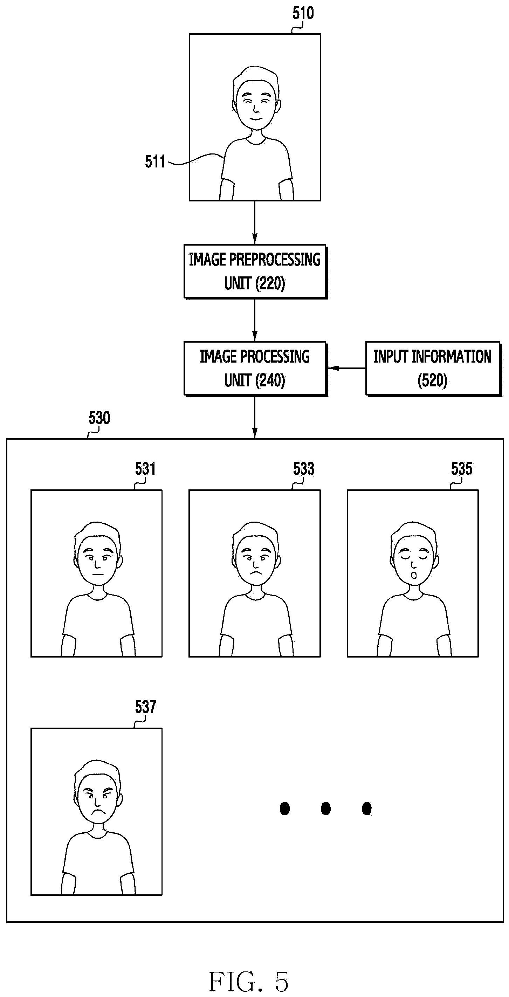

FIG. 5 illustrates an example of an operation in which the electronic device 101 generates an image for providing an intermediate experience to a user.

FIG. 5 is be described with reference to the content of FIGS. 1 and 2.

A UI manager 210 may identify a selected input image 510. The UI manager 210 may obtain a prompt related to the selected input image 510. The prompt related to the input image 510 may be a prompt selected from one or more prompts selectable from a screen displayed on a gallery application. For example, the selected prompt may include words regarding "face expression change".

The UI manager 210 may transmit the selected input image 510 to an image preprocessing unit 220. The UI manager 210 may transmit the selected input image 510 to a crawling module 230. The UI manager 210 may transmit a prompt related to the selected input image 510 to an image processing unit 240.

The image preprocessing unit 220 may detect and classify one or more objects 511 in the input image 510. For example, the image preprocessing unit 220 may detect the object 511 of the input image 510, and classify the detected object 511 as a person.

The image preprocessing unit 220 may separate the one or more objects 511 identified in the input image 510 from the input image 510. The image preprocessing unit 220 may segment the one or more objects 511, based on a boundary of each of the one or more objects 511 identified in the input image 510.

The image preprocessing unit 220 may transmit data related to the one or more objects 511 identified in the input image 510 to the image processing unit 240. The data related to the one or more objects 511 may include a type of a detected object, an area of the detected object, and/or an object image of an object segmented from the input image 510.

The image processing unit 240 may generate a generated image set 530 based on the preprocessed input image 510. The image processing unit 240 may generate an image set 530 in which at least one of an area, a composition, a representation time point, or a light source of the one or more objects 511 included in the preprocessed input image 510 is changed, by inputting a prompt, e.g., "face expression change", into a generative AI model. For example, referring to FIG. 5, the input image 510 may be an image obtained by photographing a person with a smiling expression. Generated images 531, 533, 535, and 537 included in the image set 530 may be an image obtained by photographing people with a neutral expression, a regretful expression, an unpleasant expression, and a frowning expression, respectively.

The image processing unit 240 is configured to obtain information 520 regarding a user's input. Herein, the user's input may include a gesture input, an input for shaking the electronic device 101, or a touch input for the electronic device 101. The input information 520 may be obtained at substantially the same time point as a selection time point of the input image 510.

The image processing unit 240 may identify the number according to a user's input. The image processing unit 240 may identify the number as the first number, based on the user's input representing the first gesture. The image processing unit 240 may identify the number as the second number, based on the user's input representing the second gesture. The image processing unit 240 may identify the number as the number of times the electronic device 101 has been shaken according to the user's input. Herein, the number may be the number of result images to be generated by the image processing unit 240.

The image processing unit 240 may generate the number of result images 531, 533, 535, and 537 corresponding to the input. The image processing unit 240 may generate the number of result images 531, 533, 535, and 537 corresponding to the input, by inputting the number corresponding to the input into the generative AI model as a prompt.

As described above, an electronic device 101 may provide an experience that enables a user to view an un-photographed image of a composition and/or representation time point, by generating an image in which at least one of an area, a composition, a representation time point, and a light source of the input image is changed. For example, the electronic device 101 may provide a user with a desired number of result images by enabling the user to select the number of result images for the input image.

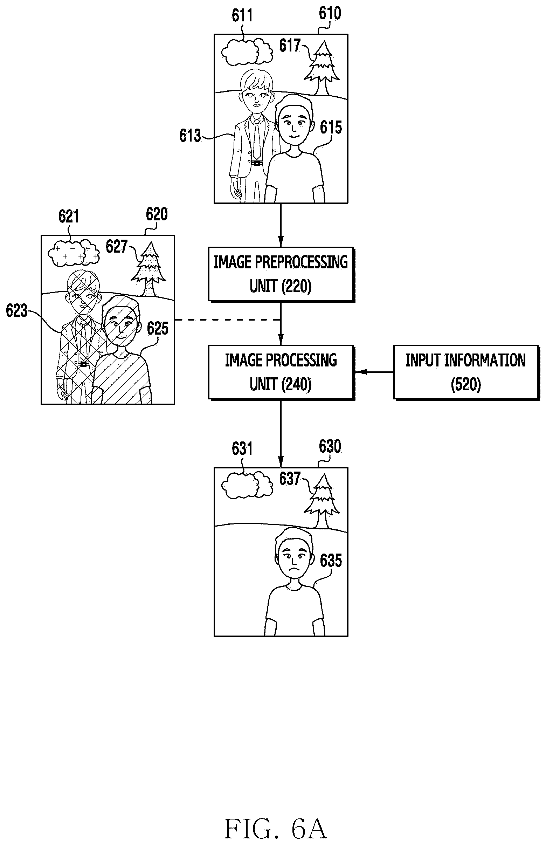

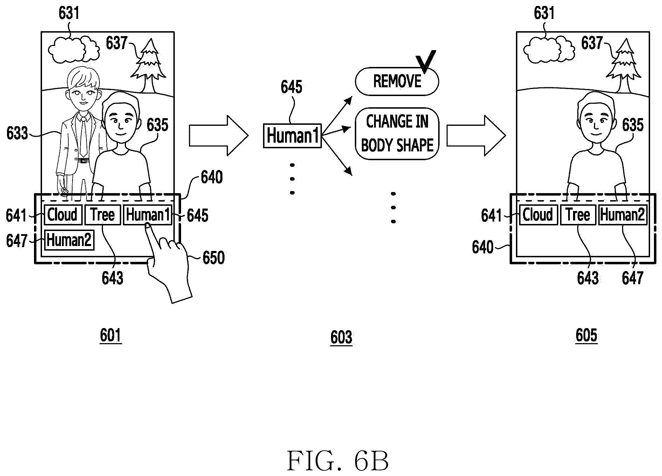

FIG. 6A illustrates an example of an operation in which an electronic device 101 generates an image to provide an intermediate experience to a user. FIG. 6B illustrates an example of an operation in which an electronic device 101 generates an image to provide an intermediate experience to a user.

FIGS. 6A and 6B is described with reference to the content of FIGS. 1 and 2.

Referring to FIG. 6A, an input image 610 may include a plurality of objects 611, 613, 615, and 617.

An image preprocessing unit 220 may preprocess the input image 610. The image preprocessing unit 220 may generate a preprocessed input image 620 by preprocessing the input image 610. Referring to FIG. 6A, a plurality of objects 621, 623, 625, and 627 may be segmented on the preprocessed input image 620.

The UI manager 210 may display the preprocessed input image 620 generated by the image preprocessing unit 220. The UI manager 210 may display the preprocessed input image 620 on the display 260 before generating a result image based on the preprocessed input image 620.

The UI manager 210 may display a screen including one or more buttons for instructing image processing for the one or more objects 621, 623, 625, and 627 separated together with the preprocessed input image 620. For example, referring to FIG. 6B, the image 601 may include a screen 640 including one or more buttons 641, 643, 645, and 647 for instructing image processing together with an image in which the one or more objects 631, 633, 635, and 637 are separated.

The UI manager 210 may identify an input requesting image processing for the one or more objects 621, 623, 625, and 627 separated together with the preprocessed input image 620. For example, referring to FIG. 6B, in response to a touch input for a button 654, an image 603 may be displayed on the display 260. The image 603 may indicate buttons, e.g., "removal" and "body shape change", in which options capable of image processing with respect to the object 633 is selectable, in response to the touch input to the button 654. For example, in response to inputting the "removal" button with respect to the object 633, the object 633 may be removed from the image 603. For example, the UI manager 210 may remove the object 633 separated from the input image 620 preprocessed through the image preprocessing unit 220. For example, the UI manager 210 may transmit the preprocessed input image 620 from which the object 633 is removed to the image preprocessing unit 220.

The image processing unit 240 may generate a result image 630, based on the preprocessed input image 620 from which the object 633 is removed.

The image processing unit 240 may generate a result image 630, based on the preprocessed input image 620 from which the object 633 is removed. When a prompt obtained through the UI manager 210 is "face expression change", the image processing unit 240 may generate a result image 630 in which the facial expression of the object 635 is changed. For example, referring to FIG. 6A, the input image 610 may include an object 615 with a smiling expression, while the result image 630 may include an object 635 with a disappointing expression.

As described above, an electronic device 101 may provide an experience that enables a user to view a result image including an object of a desired shape, by generating a result image by excluding and/or modifying an unnecessary object from the input image.

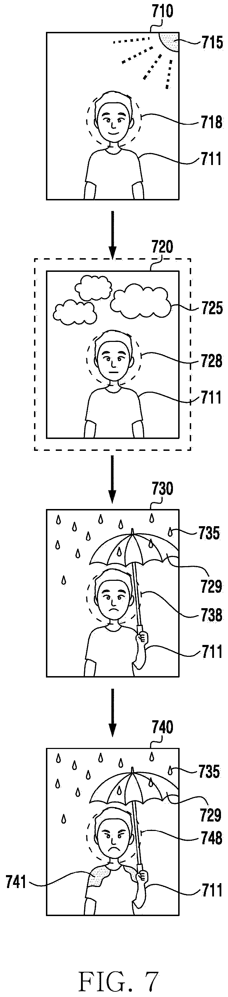

FIG. 7 illustrates an example of an operation in which the electronic device 101 generates an image for providing an intermediate experience to a user.

FIG. 7 is described with reference to the content of FIGS. 1 and 2.

A UI manager 210 may identify an input image 720.

The UI manager 210 may obtain a prompt. The UI manager 210 may obtain a prompt related to the input image 720, based on a user input. For example, the prompt may be "a weather change and a facial expression change for the input image 720".

An image preprocessing unit 220 may preprocess the input image 720. The image preprocessing unit 220 may detect and classify one or more objects 711, 725, and 728 in the input image 720. The image preprocessing unit 220 may separate the one or more objects 711, 725, and 728 from the input image 720.

The image processing unit 240 may generate a generated image, based on the preprocessed input image. The image processing unit 240 may generate generated images 710, 730, and 740 in which the weather and/or a facial expression are changed based on the preprocessed input image and a prompt, e.g., "weather change and a facial expression change for the input image 720"). Referring to FIG. 7, in the input image 720, an object related to the weather may be a cloud 725 and a facial expression of a person 711 may be a neutral facial expression 728 according to the weather. In the generated image 710, the object related to the weather may be changed from the cloud 725 to a sun 715. In the generated image 710, the facial expression of the person 711 may be changed to a smiling facial expression 718 according to the changed weather. In the generated image 730, the object related to the weather may be changed from the cloud 725 to a rain 735. In the generated image 730, the facial expression of the person 711 may be changed to an unpleasant expression 738 according to the changed weather. In the generated image 740, the object related to the weather may be changed from the cloud 725 to the rain 735. In the generated image 730, the facial expression of the person 711 may be changed to a frowned expression 748 according to the changed weather. In the generated image 730, clothes of the person 711 may be changed to a wet state 741 according to the changed weather.

The UI manager 210 may sequentially reproduce the images 710, 720, 730, and 740 through a display 260.

FIG. 7 illustrates that the images 710, 720, 730, and 740 are sequentially displayed according to the input image 720, but this is only an example. The electronic device 101 may generate result images corresponding to the current weather, by inputting weather information as a prompt together with the input image 720. The electronic device 101 may sequentially display the result images corresponding to the current weather on the display 260.

As described above, the electronic device 101 may provide a user with an experience appreciating a time-lapsed image from the input image, by generating images, or animations, that are time-lapsed based on the input image.

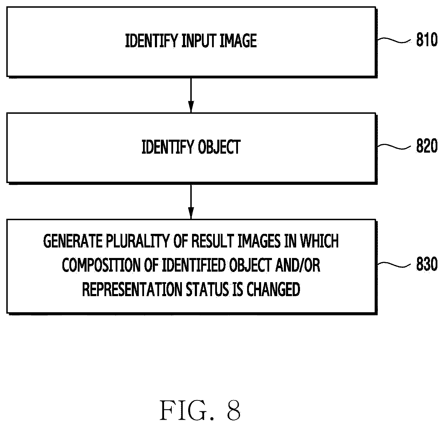

FIG. 8 is a flowchart illustrating an operation of an electronic device 101.

FIG. 8 is described with reference to the content of FIGS. 1 to 7.

Referring to FIG. 8, in operation 810, an electronic device 101 identifies an input image 310. The electronic device 101 may identify an input image from among selectable images displayed through a gallery application based on a user input. The input image may include one or more input images. At least a portion of objects may be different in the one or more input images. Meta information, e.g., EXIF, of the one or more input images may be at least partially different. At least one of location information, e.g., latitude information and longitude information; camera setting information e.g., size, pixel, F number, color temperature, shutter speed, flash, ISO sensitivity, magnification, field of view; a composition or a camera angle; a photographing device; or a photographing time may be different in the meta information for each of the one or more input images.

In operation 820, the electronic device 101 identifies an object. The electronic device 101 may detect and classify one or more objects in the input image 310. For example, the electronic device 101 may detect an area of the one or more objects in the input image 310. For example, the electronic device 101 may identify a type, e.g., food, plate, person, animal, plant, or thing, of the one or more objects detected in the input image 310. For example, when the input image 310 includes a plate including food, the electronic device 101 may identify the food and the plate.

The electronic device 101 may separate the one or more objects identified in the input image 310 from the input image 310. The electronic device 101 may segment the one or more objects, based on a boundary of each of the one or more objects identified in the input image 310. For example, when the input image 310 includes a plate including the food, the electronic device 101 may identify an area of the food and an area of the plate in the input image 310.

The electronic device 101 may estimate an area of each of the one or more objects that is deviated from the input image 310, based on the area of each of the one or more objects identified in the input image 310. An intact area of the object may include the area of the object identified in the input image 310 and the area of the object deviated from the input image 310. For example, when the input image 310 includes a plate including a food, the electronic device 101 may estimate an area of food and an area of the plate that deviate from the input image 310.

In operation 830, the electronic device 101 generates a plurality of result images in which a composition and/or representation time point of the identified object is changed.

The electronic device 101 may generate a result image, based on a preprocessed input image 320. The electronic device 101 may generate a result image in which at least one of an area, a composition, a representation time point, or a light source of the one or more objects included in the preprocessed input image 320 is changed. The electronic device 101 may generate a result image in which at least one of the area, the composition, the representation time point, or the light source of the one or more objects is changed, by inputting the input image 310, or preprocessed input image 320, into a generative AI model.

An area of an object being changed may mean that an area of an object included in the generated result image is changed to further include a newly drawn area in the area of the object included in the input image. For example, the newly drawn area may correspond to an area of an object that is deviated from the input image. A composition of the object being changed may mean that an angle or gaze of a camera of the generated result image is changed from an angle of the camera of the input image. The composition of the object being changed may mean that a position of the object in the generated result image is changed from a position of the object in the input image. The composition of the object being changed may mean that an arrangement of objects in the generated result image is changed from an arrangement of objects in the input image. The composition of the object being changed may mean that a magnification, or size, of the object in the generated image is changed from a magnification, or size, of the object in the input image. A representation time point of the object being changed may mean that a representation time point in a life cycle, or timeline, of the object included in the generated result image is different from a representation time point in a life cycle of the object included in the input image. For example, the life cycle, or timeline, may include a time interval from a start point to an end time point of the object. For example, the life cycle may include a time interval from a start point to an end time point of a specific action, or state change, of the object. When the object is food, the object may have a representation time point before eating the food at the start point of the life cycle. When the object is food, the object may have a representation time point after eating the food at the end time point of the life cycle. For example, when the object is food, the object may have a representation time point between the representation time point before eating the food and the representation time point after eating the food, at an intermediate time point in the life cycle. When the object is the sun, at the start time point of the life cycle, the object may have a representation time point related to sunrise. When the object is the sun, at the end time point of the life cycle, the object may have a representation time point related to sunset. When the object is the sun, at the intermediate time point of the life cycle, the object may have a representation time point between sunrise and sunset. The light source of the object being changed may mean that a position of the light source irradiating light to the object included in the generated image is changed from a position of light source irradiating light to the object included in the input image. The light source of the object being changed may mean that a color temperature of the light source irradiating the light to the object included in the generated image is changed from a color temperature of the light source irradiating the light to the object included in the input image.

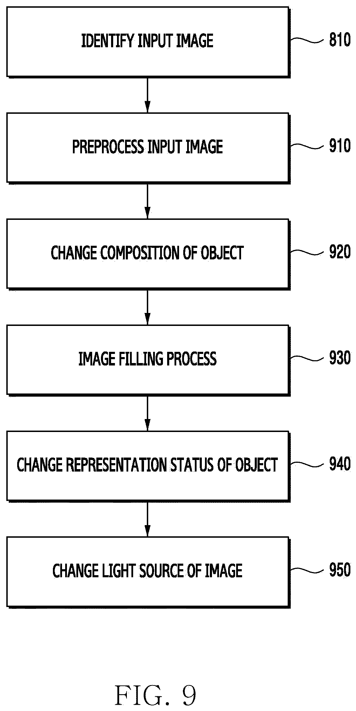

FIG. 9 is a flowchart illustrating an operation of the electronic device 101.

FIG. 9 is described with reference to the content of FIGS. 1 to 8.

Operation 810 of FIG. 9 may correspond to the operation 810 of FIG. 8. Operations 910 and 920 of FIG. 9 may be included in the operation 820 of FIG. 8. Operations 930, 940, and 950 of FIG. 9 may be included in the operation 830 of FIG. 8.

Referring to FIG. 9, in the operation 810, an electronic device 101 identifies an input image 310.

In the operation 910, the electronic device 101 preprocesses the input image 310. The preprocessing of the input image 310 may include processing, e.g., denoise, deblur, dehaze, and white balance, for improving the image quality of the input image. The preprocessing of the input image 310 may include processing for detecting and classifying one or more objects. The preprocessing of the input image 310 may include processing for segmenting the one or more objects.

In the operation 920, the electronic device 101 changes a composition of the object. The electronic device 101 may generate one or more first intermediate step images in which a composition of the one or more objects included in the input image is changed. The electronic device 101 may generate the one or more first intermediate step images in which the composition of the one or more objects included in the input image is changed, by inputting a prompt into a generative AI model. The electronic device 101 may generate the one or more first intermediate step images in which the composition of the one or more objects included in the input image is changed, by inputting a prompt related to the composition of one or more objects into a generative AI model. The electronic device 101 may generate the one or more first intermediate step images in which an angle or gaze of the camera, a position or photographing position of the camera, an arrangement, and/or a magnification of the one or more objects included in the input image are changed, by inputting the prompt related to the composition of the one or more objects into the generative AI model. The prompt related to the composition may be words indicating the angle or the gaze of the camera, the position of the object or the photographing position of the camera, the arrangement of the object, and/or the magnification of the image. An example of the prompt related to the composition of the object may be "Change to a state in which the food is photographed from above", "Change to a state in which the food is photographed from the front", "Change to a state seen by the sun", "Change an arrangement of plates to a designated arrangement", "Change the size of the plate", or "Change the size of the image".

In the operation 930, the electronic device 101 performs image filling processing. The electronic device 101 may generate an image on which the image filling process, e.g., in-painting or out-painting, is performed, based on an area of the one or more objects included in the input image. The electronic device 101 may perform the image filling process for the one or more first intermediate step images, by inputting a prompt into the generative AI model. Herein, the image filling process may be a process of newly drawing an area other than the area of the one or more objects. The prompt for the image filling process may be words indicating a texture of the filled area. An example of the prompt for the image filling process may be "food plates placed on a table", "a flower bed", or "a street covered in fallen leaves ".

In the operation 940, the electronic device 101 changes a representation time point of the object. The electronic device 101 may generate one or more third intermediate step images in which a representation time point of the one or more objects included in the input image is changed, by inputting the prompt into the generative AI model. The electronic device 101 may generate the one or more third intermediate step images in which the representation time point of the one or more objects included in the input image is changed, by inputting the prompt related to the representation time point of the one or more objects into the generative AI model. The electronic device 101 may generate the one or more third intermediate step images in which a time point according to the life cycle of the one or more objects included in the input image is changed, by inputting the prompt related to the representation time point of the one or more objects into the generative AI model. The prompt related to the representation time point may be words for the time point. An example of the prompt related to the time point of an object may be "Change to a state before eating food", "Change to a state after eating food", "Change to a state just before the sun rises", "Change to another season", "Change to another time zone", "Change to a state after raining", or "Change to a state wet in the rain".

In the operation 950, the electronic device 101 changes a light source of the image. The electronic device 101 may generate an image in which the light source for the one or more objects included in the input image is changed based on a relight module. The electronic device 101 may generate one or more fourth intermediate step images in which the light source for the one or more objects included in the input image is changed.

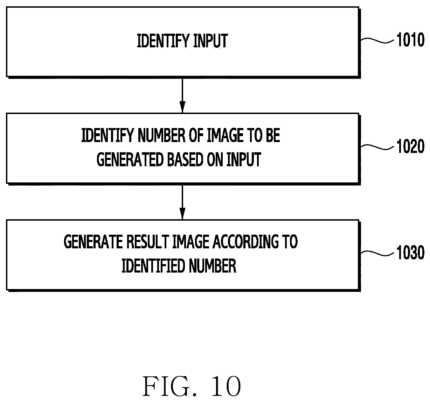

FIG. 10 is a flowchart illustrating an operation of the electronic device 101.

FIG. 10 is described with reference to the content of FIGS. 1 to 8.

Operation 1030 of FIG. 10 may be included in the operation 830 of FIG. 8.

Referring to FIG. 10, in operation 1010, an electronic device 101 identifies an input. Herein, a user's input may include a gesture input, an input for shaking the electronic device 101, or a touch input for the electronic device 101. Input information 520 may be obtained at substantially the same time point as a selection time point of the input image 510.

In operation 1020, the electronic device 101 identifies the number of images to be generated, based on the input. The electronic device 101 may identify the number as the first number, based on the user's input representing the first gesture. The electronic device 101 may identify the number as the second number, based on the user's input representing the second gesture. The electronic device 101 may identify the number as the number of times the electronic device 101 has been shaken according to the user's input. Herein, the number may be the number of result images to be generated by the electronic device 101.

In the operation 1030, the electronic device 101 generates a result image according to the identified number. The electronic device 101 may generate the number of result images 531, 533, 535, and 537 corresponding to the input, by inputting the number corresponding to the input into a generative AI model as a prompt.

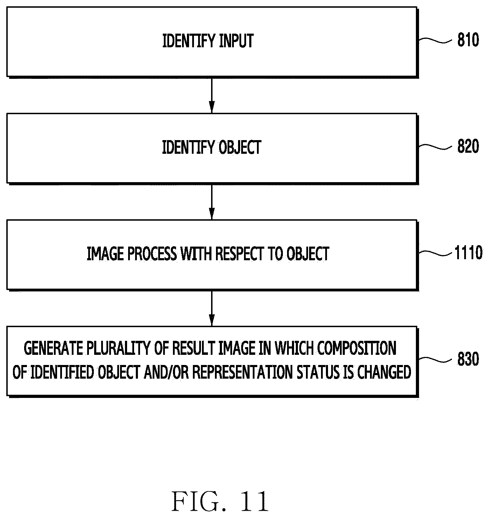

FIG. 11 is a flowchart illustrating an operation of the electronic device 101.

FIG. 11 is described with reference to the content of FIGS. 1 to 8.

Operations 810, 820, and 830 of FIG. 11 may correspond to the operations 810, 820, and 830 of FIG. 8, respectively.

Referring to FIG. 11, in the operation 810, an electronic device 101 identifies an input image. The electronic device 101 may identify the input image from among selectable images displayed through a gallery application based on a user input.

In operation 820, the electronic device 101 identifies the object. The electronic device 101 may detect and classify one or more objects in an input image 310. The electronic device 101 may separate the one or more objects identified in input image 310 from the input image 310.

In operation 1110, the electronic device 101 performs image processing with respect to the object. The electronic device 101 may perform image processing with respect to the object based on an input. The electronic device 101 may perform image processing with respect to the object, based on the input obtained while displaying the one or more objects separated from the input image 310. The electronic device 101 may perform image processing with respect to the object, based on the input for at least one object among the one or more objects separated from the input image 310. The electronic device 101 may perform image processing with respect to the object, based on the input to a screen displayed together with a preprocessed input image 320. The screen may include one or more buttons for instructing image processing for the one or more separated objects. For example, the image processing may include a deletion of the object selected by the input, a shape correction e.g., to fatten or to slim the object selected by the input, and/or a movement of the object selected by the input.

In the operation 830, the electronic device 101 generates a plurality of result images in which a composition and/or a representation time point of the identified object is changed. The electronic device 101 may generate a result image, based on an image-processed object in the preprocessed input image 320. The electronic device 101 may generate a result image in which at least one of an area, a composition, a representation time point, and a light source of the image-processed object is changed in the preprocessed input image 320.

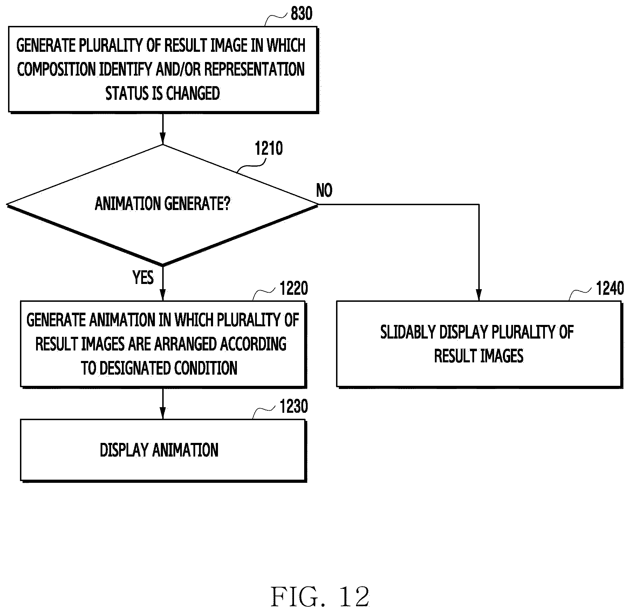

FIG. 12 is a flowchart illustrating an operation of the electronic device 101.

FIG. 12 is described with reference to the content of FIGS. 1 to 8.

Operation 830 of FIG. 12 may correspond to the operation 830 of FIG. 8.

Referring to FIG. 12, in the operation 830, an electronic device 101 generates a plurality of result images in which a composition and/or a representation time point of an identified object is changed. The electronic device 101 may generate a result image based on a preprocessed input image 320. The electronic device 101 may generate a result image in which at least one of an area, a composition, a representation time point, and a light source of one or more objects included in the preprocessed input image 320 is changed. The electronic device 101 may generate the result image in which at least one of the area, the composition, the representation time point, and the light source of the one or more objects is changed, by inputting the input image 310, or the preprocessed input image 320, into a generative AI model.

In operation 1210, the electronic device 101 identifies whether generation of an animation is required. The electronic device 101 may identify that the generation of an animation is required, based on a user input requesting the generation of an animation. When the result image based on the input image is set to a wallpaper, the electronic device 101 may identify that generation of an animation is required. The electronic device 101 may identify that generation of an animation is required, based on a user input selecting a natural, or seamless, background change mode. The user input may be obtained when selecting an input image. For example, the electronic device 101 may obtain a user input through a screen that queries whether to generate an animation based on that an input image is selected through the UI manager 210.

The electronic device 101 is configured to perform operation 1220 in response to identification that generation of an animation is required. The electronic device 101 is configured to perform operation 1240, in response to identification that generation of an animation is not required.

In operation 1220, the electronic device 101 generates an animation in which a plurality of result images are arranged according to a designated condition. The designated condition may be related to the weather. For example, the electronic device 101 may select a portion of the plurality of result images, which matches current weather information. The designated condition may be related to a timeline, or life cycle. For example, the electronic device 101 may select a portion of images within the life cycle of the object, among a plurality of the result images.

The electronic device 101 may arrange the selected partial images in a chronological order. The electronic device 101 may generate an animation, based on the selected partial images arranged in the chronological order.

In operation 1230, the electronic device 101 displays the generated animation. The electronic device 101 may display the animation on the display 260, as a wallpaper.

In operation 1240, the electronic device 101 displays a plurality of result images in a way as to be slidable. The electronic device 101 may display the plurality of result images to be slid and switched at a designated time interval.

As described above, the electronic device 101 includes a processor 120. The electronic device 101 includes memory 130 storing instructions. The instructions may be configured, when executed by the processor 120, to cause the electronic device 101 to select an object of at least one object 321 and 325 included in the input image 310. The instructions may be configured, when executed by the processor, to cause the electronic device to identify indication information regarding a state change of the selected object. The instructions may be configured, when executed by the processor 120, to cause the electronic device 101 to obtain a prompt related to the input image 310 based on the indication information. The prompt may include at least one word for changing a state regarding the selected object included in the input image 310. The state may be included within a range of possible different states of the selected object. The instructions may be configured, when executed by the processor 120, to cause the electronic device 101 to generate at least one result image 330 in which the state of the selected object is changed by inputting the input image 310 and the prompt into a generative AI model.

The input image 310 may include a plurality of input images 310, 411, and 415. The selected object may be one or more objects among a plurality of objects 321, 325, 431, 433, 435, 437, 441, 443, 445, and 447 included in the plurality of input images 310, 411, and 415. The instructions may be configured, when executed by the processor 120, to cause the electronic device 101 to obtain the prompt related to an arrangement of the one or more objects selected from the plurality of input images 310, 411, and 415. The instructions may be configured, when executed by the processor 120, to cause the electronic device 101 to generate the at least one result image 330 with the one or more selected objects arranged within the at least one result image 330 by inputting the plurality of input images and the prompt to the generative AI model.

The instructions may be configured, when executed by the processor 120, to cause the electronic device 101 to identify a background area of each of the plurality of input images 310, 411, and 415. The instructions may be configured, when executed by the processor 120, to cause the electronic device 101 to obtain the prompt for guiding the image filling process of the at least one result image 330. The prompt may include at least one word associated with the background area of each of the plurality of input images 310, 411, and 415. The instructions may be configured, when executed by the processor 120, to cause the electronic device 101 to generate the at least one result image 330 of which the image filling process is performed on the background area of the at least one result image 330.

The instructions may be configured, when executed by the processor 120, to cause the electronic device 101 to obtain at least one reference image based on meta information of the plurality of input images 310, 411, and 415. The instructions are configured, when executed by the processor 120, to cause the electronic device 101, based on an arrangement of a plurality of objects included in the at least one reference image, to obtain the prompt related to the arrangement of the one or more objects selected from the plurality of input images 310, 411, and 415.

The electronic device may further include a display 160, 260. The instructions are configured, when executed by the processor 120, to cause the electronic device 101 in response to an input selecting the input image 310 to display, on the display 160, 260, a screen including a plurality of selectable prompts related to the input image 310. The instructions are configured, when executed by the processor 120, to cause the electronic device 101, based on selection of a portion of the plurality of selectable prompts included in the screen, to obtain the prompt related to the input image 310.

The selected object in the input image 310 may represent a person. The state of the selected object included in the at least one result image 330 may be different from the state of the object of the input image 310. The state of the selected object included in the at least one result image 330 may be one of a state when the person represents a first expression, or a state when the person represents a second expression different from the first expression.

The object 321 and 325 of the input image 310 may represent food. The state of the selected object included in the at least one result image 330 may be different from the state of the selected object of the input image 310. The state of the selected object included in the at least one result image 330 may be one of a state before eating the food, the state during eating the food, or the state after eating the food.

The instructions may be configured, when executed by the processor 120, to cause the electronic device 101, based on meta information of the input image 310, to obtain at least one reference image. The instructions may be configured, when executed by the processor 120, to cause the electronic device 101, based on the composition of at least one object included in the at least one reference image, to obtain the prompt including the at least one word for setting the composition for the selected object.

The electronic device 101 may further include a display 160, 260. The instructions may be configured, when executed by the processor 120, to cause the electronic device 101, based on information on at least one object included in the at least one reference image, to generate tag information on the selected object included in the at least one result image 330. The instructions may be configured, when executed by the processor 120, to cause the electronic device 101, while the at least one result image 330 is displayed through the display 160, 260 in response to an input for selecting the tag information, to provide a search result of the tag information.

The instructions may be configured, when executed by the processor 120, to cause the electronic device 101 to obtain input from a user of the electronic device 101. The instructions may be configured, when executed by the processor 120, to cause the electronic device 101 to generate a number of which corresponds to the input. The number of result images 330 of which corresponds to the input may have different states of the object.

The electronic device 101 may further include a display 160, 260. The result image 330 may include a plurality of result images 330 having different compositions of the object. The instructions may be configured, when executed by the processor 120, to cause the electronic device 101 to generate an animation in which the plurality of result images 330 are arranged in order for a composition to change continuously during playback of the animation. The instructions may be configured, when executed by the processor 120, to cause the electronic device 101 to display the generated animation via the display 160, 260.

The electronic device 101 may further include a display 160, 260. The result image 330 may include a plurality of result images 330 having different states of the object. The instructions may be configured, when executed by the processor 120, to cause the electronic device 101 to display, via the display 160, 260, the plurality of result images 330 that are arranged such that the representation time point changes continuously over time during playback.

As described above, a method may be executed by the electronic device 101. The method may include an operation of selecting an object of at least one object 321 and 325 included in the input image 310. The method may include an operation of identifying indication information regarding a state change of the selected object. The method may include an operation of obtaining a prompt related to the input image 310 based on the indication information. The prompt may include at least one word for changing a state regarding the selected object included in the input image 310. The state may be included within a range of possible different states of the selected object. The method may include an operation of generating at least one result image 330 in which the state of the selected object is changed by inputting the input image 310 and the prompt into a generative AI model.

The input image 310 may include a plurality of input images 310, 411, and 415. The selected object may be one or more objects among a plurality of objects 321, 325, 431, 433, 435, 437, 441, 443, 445, and 447 included in the plurality of input images 310, 411, and 415. The method may include an operation of obtaining the prompt related to an arrangement of the one or more objects selected from the plurality of input images 310, 411, and 415. The method may include an operation of generating the at least one result image 330 with the one or more objects arranged within the at least one result image 330 by inputting the plurality of input images 310, 411, and 415 and the prompt to the generative AI model.

The method may include an operation of identifying a background area of each of the plurality of input images 310, 411, and 415. The method may include an operation of obtaining the prompt for guiding image filling process for a background area of the at least one result image 330. The prompt may include at least one word associated with the background area of each of the plurality of input images 310, 411, and 415. The method may include an operation of generating the at least one result image 330 of which the image filling process is performed on the background area by inputting the plurality of input images 310, 411, and 415 and the prompt to the generative AI model.

The method may include an operation of obtaining at least one reference image based on meta information of the plurality of input images 310, 411, and 415. The method may include an operation of obtaining the prompt related to the arrangement of the one or more objects selected from the plurality of input images 310, 411, and 415 based on an arrangement of the plurality of objects included in the at least one reference image.

The method may include, in response to an input for selecting the input image 310, an operation of displaying, on a display 160, 260 of the electronic device 101, a screen including a plurality of selectable prompts related to the input image 310. The method may include an operation of obtaining a prompt related to the input image 310 based on selection of a portion of the plurality of prompts included in the screen.

The method may include an operation of obtaining at least one reference image based on meta information of the input image 310. The method may include an operation of obtaining the prompt including the at least one word for setting the composition for the selected object based on a composition of at least one object included in the at least one reference image.

The method may include an operation of obtaining an input of a user of the electronic device 101. The method may include an operation of generating result images 330 of which a number corresponds to the input. The resultant images 330, of which a number corresponds to the input, may have different states of the object.

As described above, a non-transitory computer readable storage medium may store a program including instructions. The instructions may be configured, when executed by the processor 120 of the electronic device 101, to cause the electronic device 101 to select an object of at least one object 321 and 325 included in the input image 310. The instructions may be configured, when executed by the processor of the electronic device, to cause the electronic device to identify indication information regarding a state change of the selected object. The instructions may be configured, when executed by the processor 120 of the electronic device 101, to cause the electronic device 101 to obtain a prompt related to the input image 310 based on the indication information. The prompt may include at least one word for changing a state of the selected object included in the input image 310. The timeline may include states within the range of different states of the selected object. The instructions may be configured, when executed by the processor 120 of the electronic device 101, to cause the electronic device 101, by inputting the input image 310 and the prompt into a generative AI model, to generate at least one result image in which the state of the selected object is changed.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
a processor (120), and
memory (130) storing instructions (140), wherein the instructions (140) are configured, when executed by the processor (120), to cause the electronic device (101) to:
select an object (321, 325) included in an input image (310),
identify indication information in the form of a command regarding an intended state change of the selected object, and
obtain a prompt related to the input image (310) based on the indication information, wherein the prompt includes at least one word for changing a state of the selected object, the state being included within a range of different possible states for the selected object,
by inputting the input image (310) and the prompt into a generative artificial intelligence "AI" model, generate at least one result image (330) in which the state of the selected object is changed.

2. The electronic device of claim 1,
wherein a plurality of images (310, 411, 415) are provided as the input image (310),
wherein the selected object is one or more objects among a plurality of objects (321, 325, 431, 433, 435, 437, 441, 443, 445, 447) included in the plurality of input images (310, 411, 415), and
wherein the instructions (140) are configured, when executed by the processor (120), to cause the electronic device (101) to:
obtain the prompt related to an arrangement of the one or more objects selected from the plurality of input images (310, 411, 415),
by inputting the plurality of input images (310, 411, 415) and the prompt to the generative AI model, generate the at least one result image (330) with the one or more selected objects arranged within the at least one result image (330).

3. The electronic device of claim 2,
wherein the instructions (140) are configured, when executed by the processor (120), to cause the electronic device (101) to:
identify a background area of each of the plurality of input images (310, 411, 415),
obtain the prompt for guiding an image filling process for a background area of the at least one result image (330), wherein the prompt includes at least one word associated with the background area of each of the plurality of input images (310, 411, 415),
by inputting the plurality of input images (310, 411, 415) and the prompt to the generative AI model, generate the at least one result image (330) of which the image filling process is performed on the background area of the at least one result image (330).

4. The electronic device of claim 2,
wherein the instructions (140) are configured, when executed by the processor (120), to cause the electronic device (101) to:
obtain at least one reference image based on meta information of the plurality of input images,
based on an arrangement of a plurality of objects included in the at least one reference image, obtain the prompt related to the arrangement of the one or more objects selected from the plurality of input images (310, 411, 415).

5. The electronic device of any preceding claim,
further comprising a display (160, 260),
wherein the instructions (140) are configured, when executed by the processor (120), to cause the electronic device (101) to:
in response to an input selecting the input image (310), display, on the display (160, 260), a screen including a plurality of selectable prompts related to the input image (310),
based on selection of a portion of the plurality of selectable prompts included in the screen, obtain the prompt related to the input image (310).

6. The electronic device of any preceding claim,
wherein the selected object in the input image (310) represents a person,
wherein the state of the selected object included in the at least one result image (330) is different from the state of the object in the input image (310), and
wherein the state of the selected object included in the at least one result image (330) is one of a state when the person represents a first expression, or a state when the person represents a second expression different from the first expression.

7. The electronic device of any preceding claim,
wherein the object (321, 325) in the input image (310) represents food,
wherein the state of the selected object included in the at least one result image (330) is different from the state of the selected object in the input image (310), and
wherein the state of the selected object included in the at least one result image (330) is one of a state before eating the food, a state during eating the food, or a state after eating the food.

8. The electronic device of claim 1,
wherein the instructions (140) are configured, when executed by the processor (120), to cause the electronic device (101) to:
based on meta information of the input image (310), obtain at least one reference image,
based on a composition of at least one object included in the at least one reference image, obtain the prompt including the at least one word for setting the composition for the selected object.

9. The electronic device of claim 8,
further comprising a display (160, 260),
wherein the instructions (140) are configured, when executed by the processor (120), to cause the electronic device (101) to:
based on information about at least one object included in the at least one reference image, generate tag information about the selected object included in the at least one result image (330),
while the at least one result image (330) is displayed on the display (160, 260), in response to an input for selecting the tag information, provide a search result of the tag information.

10. The electronic device of any preceding claim,
wherein the instructions (140) are configured, when executed by the processor (120), to cause the electronic device (101) to:
obtain input from a user of the electronic device (101), and
generate result images (330) the number of which corresponds to the input,
wherein the result images (330) have different states of the object.

11. The electronic device of claim 1,
further comprising a display (160, 260),
wherein the result image (330) includes a plurality of result images (330) having different compositions of the object,
wherein the instructions (140) are configured, when executed by the processor (120), to cause the electronic device (101) to:
generate an animation in which the plurality of result images (330) are arranged in order for a composition to change continuously during playback of the animation, and
display the generated animation via the display (160, 260).

12. The electronic device of claim 1,
further comprising a display (160, 260),
wherein the result image (330) includes a plurality of result images (330) having the different states of the object,
wherein the instructions (140) are configured, when executed by the processor (120), to cause the electronic device (101) to:
display, via the display (160, 260), the plurality of result images (330) that are arranged such that the state changes continuously over time during playback.

13. A method executed by an electronic device, comprising:
selecting an object included in an input image,
identifying indication information in the form of a command regarding an intended state change of the selected object, and
obtaining a prompt related to the input image (310) based on the indication information, wherein the prompt includes at least one word for changing a state regarding the selected object included in the input image (310), and the state is included within a range of different possible states of the selected object,
by inputting the input image (310) and the prompt into a generative AI model, generating at least one result image (330) in which the state of the selected object is changed.

14. The method of claim 13, comprising further operations as described for the electronic device of any one of claims 1 to 12.

15. A non-transitory computer readable storage medium storing a program including instructions configured, when executed by a processor (120) of an electronic device (101), to cause the electronic device to operate as set out in any one of claims 1 to 12.
